# EUROPEAN PATENT SPECIFICATION

(11) **EP 1 665 725 B1**
(45) Date of publication and mention of the grant of the patent: **05.03.2008**
(21) Application number: 04742216.7
(22) Date of filing: 10.08.2004
(51) Int. Cl.: H04L 29/06, H04L 12/56

(54) **REMOTE IPSEC SECURITY ASSOCIATION MANAGEMENT**
FERNVERWALTUNG VON IPSEC-SICHERHEITSASSOZIATIONEN
TELEGESTION DES ASSOCIATIONS SECURITAIRES IPSEC

(30) Priority: 22.09.2003 FI 20031361
(43) Date of publication of application: 07.06.2006
(73) Proprietor: Nokia Corporation, 02150 Espoo (FI)
(72) Inventor: POUSSA, Sakari, FI-02180 Espoo (FI); LATVALA, Mikael, FI-00730 Helsinki (FI)
(74) Representative: Simmelvuo, Markku Kalevi
(86) International application number: PCT/FI2004/000473
(87) International publication number: WO 2005/029811

(56) References cited:
- EP-A2- 1 158 826
- US-A1- 2002 133 608
- US-A1- 2002 157 024
- US-A1- 2003 031 151
- US-A1- 2003 046 585
- US-A1- 2003 126 466

## Description

### BACKGROUND OF THE INVENTION:

### Field of the Invention:

The invention relates to communications technology. In particular, the invention relates to a novel and improved method and system for remotely and transparently managing security associations of Internet Protocol Security.

### Description of the Related Art:

Internet Protocol Security, also referred to as IPSec or IPsec, is a framework for providing security in IP networks at network layer. IPSec is developed by The Internet Engineering Task Force (IETF). RFC documents (Request for Comments, RFC) 2401 to 2409 by IETF describe IPSec.

IPSec provides confidentiality services and authentication services to IP traffic. These services are provided by protocols called Authentication Header (AH, described in RFC 2402), which essentially allows authentication of the sender of data, and Encapsulating Security Payload (ESP, described in RFC 2406), which supports both authentication of the sender and encryption of data.

Authentication Header and Encapsulating Security Payload require session keys in order to operate. The session keys are typically generated via key management protocols, such as Internet Key Exchange (IKE, described in RFC 2409). A key management protocol called Authentication and Key Agreement (AKA) may also be used, particularly in communication networks based on 3GPP (3^{rd} Generation Partnership Project) systems. Additionally, there are other key management protocols that may be used.

In addition to the protocols mentioned above, IPSec uses security associations to provide its services. An IPSec security association comprises such information as traffic selectors, cryptographic transforms, session keys and session key lifetimes. A key management application is responsible for negotiating the creation and deletion of an IPSec security association.

Typically IPSec services and key management protocols may be found e.g. in dedicated security gateways, servers, desktop computers and handheld terminals. In prior art, whatever the target device, the IPSec services and key management protocols are tied together in the sense that they are co-located in the same device. So it also follows that the communication mechanism between IPSec services and an associated key management protocol is local.

In a distributed computing environment, however, network element functionality benefits from an architecture in which various applications are located in dedicated devices. For example, applications requiring cryptographic operations are typically located in a special purpose device containing suitable hardware and software for the task. Other applications may require more CPU processing power and may therefore be located in a different type of special purpose device. Further, in a distributed computing environment, applications typically require services from each other in order to provide the network element functionality.

In the case of network layer security, IPSec and its associated key management protocols are examples of applications requiring services from each other. It would be beneficial to arrange IPSec service on a device capable of high-speed symmetric cryptography, and to arrange its associated key management protocol in another device with high CPU power and/or asymmetric cryptography acceleration. Yet, as mentioned above, in prior art IPSec service and the key management protocol used by it are located in the same computing device. There are many key management protocols, each with different characteristics. If, as is the case with prior art, all these various key management protocols have to be located in the same device as the IPSec service, network element design, implementation and deployment become inefficient and sometimes even impossible.

Prior art includes US 2002/157024 which discloses an intelligent security association management server arranged between two nodes in communication using IPsec, thereby allowing the security association management server to analyze the communications between the two nodes.

Prior art further includes US 2003/126466 which discloses implementing IPsec at IP level.

Thus there is an obvious need for a more sophisticated approach allowing IPSec service and its associated key management protocols to be arranged on different devices, particularly in distributed computing environments. Further, it would be beneficial to be able to transparently do this distribution of IPSec and its associated key management.

### SUMMARY OF THE INVENTION:

The present invention concerns a method according to claim 10 and a system for remotely and transparently managing security associations of Internet Protocol Security.

The system comprises one or more application devices.

The system further comprises a service device. The service device comprises an Internet Protocol Security service means for providing one or more Internet Protocol Security services including at least one of authentication and encryption services.

The system further comprises a communication network for connecting the application devices to the service device.

The system further comprises a security association management application means configured to create and manage, with a session key management protocol, security associations for use by the provided Internet Protocol Security services.

In accordance with the invention, the security association management application means comprises at least one management client arranged in the application device and a management server arranged in the service device, wherein the at least one management client is configured to issue security association creation and management requests, and the management server is configured to receive the issued security association creation and management requests and to respond to them in connection with the Internet Protocol Security service means.

In an embodiment of the invention at least one application device further comprises an interface means for providing an interface via which the at least one management client associated with the application device and the management server communicate with each other. Thus, the interface means according to the present invention and the management server according to the present invention allow such distribution of IPSec and its associated key management that is transparent to the management client and to the Internet Protocol Security service means. In other words, present management clients do not need to be modified for them to be able use services provided by the Internet Protocol Security service means even though said Internet Protocol Security service means may be located on another device than said management client.

In an embodiment of the invention the security association management requests include requests for adding security associations, requests for deleting security associations, and/or requests for querying about security associations.

In an embodiment of the invention the interface means includes data structures used in communication between the management client and the management server, and the interface means are implemented as a software library linked dynamically or statistically into a corresponding management client.

In an embodiment of the invention the interface means are arranged to use sockets for communication with the management server.

In an embodiment of the invention the Internet Protocol Security service means and the management server are arranged to use a local communication channel for communication with each other.

In an embodiment of the invention at least one application device comprises two or more management clients, at least two of which management clients utilize session key management protocols different from each other.

In an embodiment of the invention said communication network is a Local Area Network.

The invention makes it possible to remotely manage IPSec security associations. IPSec and its associated key management can be transparently distributed to separate computing devices. Thus each computing device can be optimized to run a specific application. This in turn increases performance and flexibility.

Yet, the invention does not preclude utilizing standard prior art solutions when beneficial. E.g. in smaller configurations the IPSec and its associated key management may still be co-located in the same device. This may be accomplished by switching a remote communication channel to a local one. The switch is transparent to the applications, thus minimizing development effort, and increasing flexibility.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
Figure 1 is a block diagram illustrating a system according to one embodiment of the invention; and
Figure 2 illustrates a method according to one embodiment of the invention.

### DETAILED DESCRIPTION OF THE PREFERRED EMBODIMENTS:

Reference will now be made in detail to the embodiments of the invention, examples of which are illustrated in the accompanying drawings.

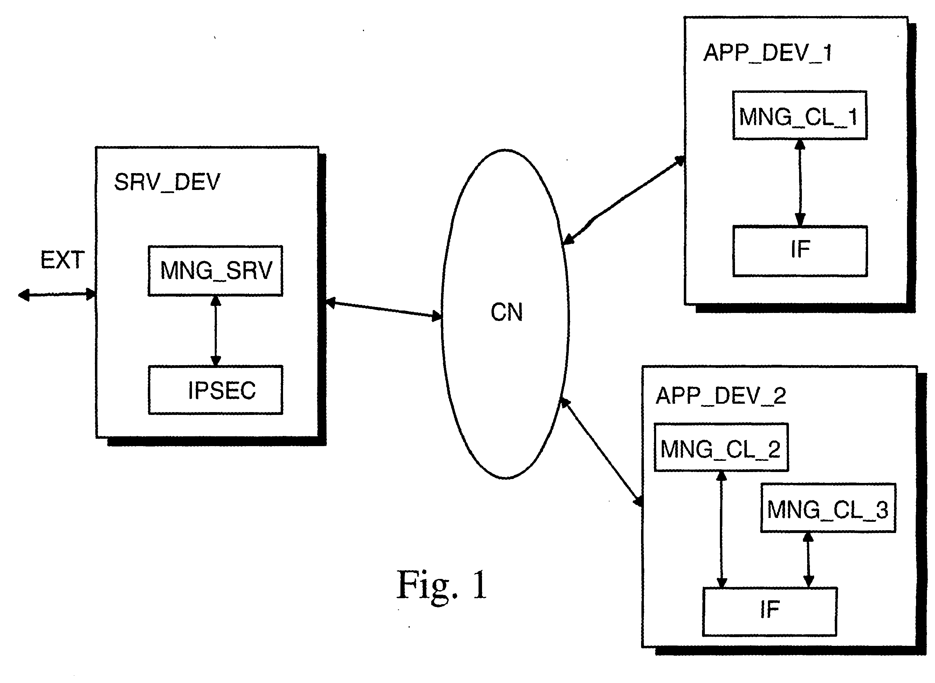

Figure 1 illustrates a system for remotely and transparently managing security associations of Internet Protocol Security according to an embodiment of the invention. In the exemplary embodiment of the invention illustrated in Figure 1 the system comprises two application devices APP_DEV_1 and APP_DEV_2. The application device APP_DEV_1 comprises one management client MNG_CL_1 for issuing security association management requests, whereas the application device APP_DEV_2 comprises two management clients MNG_CL_2 and MNG_CL_3. The security association management requests issued by management clients MNG_CL_1, MNG_CL_2 and MNG_CL_3 include requests for adding security associations, requests for deleting security associations, and/or requests for querying about security associations. In the exemplary embodiment of the invention illustrated in Figure 1 the management clients MNG_CL_1, MNG_CL_2, MNG_CL_3 each utilize a different session key management protocol.

Internet Protocol Security is typically utilized for example by IP Multimedia Subsystem (IMS) of a 3GPP system based telecommunication network. In such a case, a user equipment (not illustrated) may communicate with the application device APP_DEV_1 or APP_DEV_2 by using a key management protocol, and the end result of this communication is then forwarded to the service device SRV_DEV by the application device APP_DEV_1 or APP_DEV_2. Thus, in this case, the application device APP_DEV_1 or APP_DEV_2 may be running a server portion of the key management protocol, whereas the user equipment may be running a client portion of the key management protocol. The user equipment may use its own local mechanism to communicate the end result to its own IPSec service.

In the exemplary embodiment of the invention illustrated in Figure 1 the system further comprises a service device SRV_DEV. The service device SRV_DEV comprises an Internet Protocol Security service means IPSEC for providing one or more Internet Protocol Security services. The service device SRV_DEV further comprises a management server MNG_SRV for receiving the issued requests and for responding, in connection with the Internet Protocol Security service means IPSEC, to the received requests. The system further comprises a communication network CN for connecting the application devices to the service device.

In the exemplary embodiment of the invention illustrated in Figure 1 the application devices APP_DEV_1 and APP_DEV_2 each further comprise an interface means IF for providing an interface via which the management clients MNG_CL_1, MNG_CL_2, MNG_CL_3 and the management server MNG_SRV communicate with each other. Further in the exemplary embodiment of the invention illustrated in Figure 1 the interface means IF include data structures (not illustrated) used in communication between the management clients MNG_CL_1, MNG_CL_2, MNG_CL_3 and the management server MNG_SRV, and the interface means IF are each implemented as a software library (not illustrated) which may be linked either dynamically or statistically into a management client.

Further in the exemplary embodiment of the invention illustrated in Figure 1 the interface means IF are each arranged to use sockets for communication with the management server MNG_SRV, and the Internet Protocol Security service means IPSEC and the management server MNG_SRV are arranged to use a local communication channel for communication with each other.

Further, as illustrated in Figure 1, external IP traffic EXT entering the system is pre ferably routed via the service device SRV_DEV.

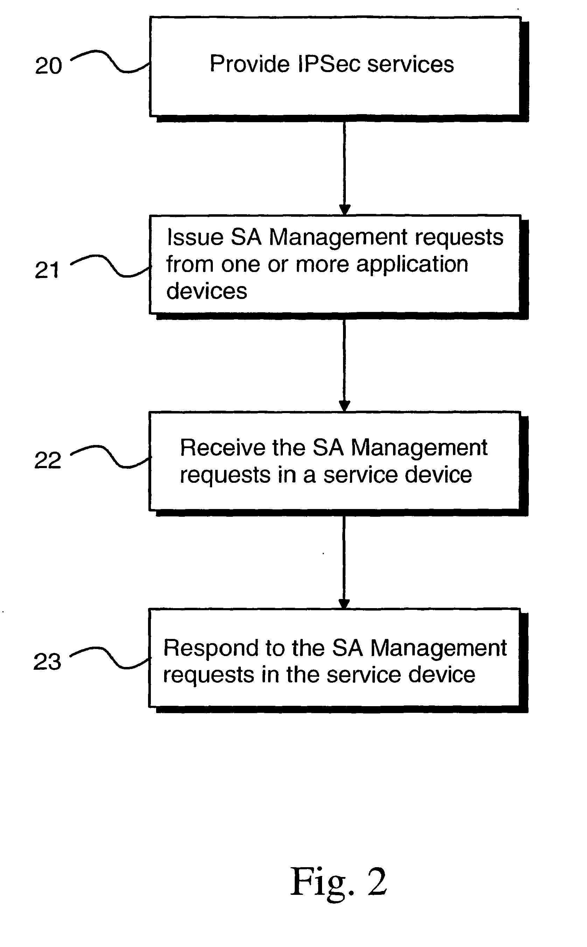

Figure 2 illustrates a method for remotely and transparently managing security associations of Internet Protocol Security according to an embodiment of the invention.

One or more Internet Protocol Security services are provided in a service device, phase 20. Security association management requests are issued from one or more application devices, phase 21. The application devices have been securely connected to the service device by a communication network.

The issued requests are received in the service device, phase 22. The received requests are responded to in the service device in connection with the provided Internet Protocol Security services, phase 23.

In the exemplary embodiment of the invention illustrated in Figure 2 the security association management requests issued from an application device, and/or corresponding responses are communicated via an interface associated with said application device.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A system for remotely and transparently managing security associations of Internet Protocol Security, the system comprising:
an application device (APP_DEV_1);
a service device (SRV_DEV) comprising an Internet Protocol Security service means (IPSEC) for providing one or more Internet Protocol Security services, said Internet Protocol Security services including at least one of authentication and encryption services;
a communication network (CN) for connecting said application device (APP_DEV_1) to said service device (SRV_DEV); and
a security association management application means configured to create and manage, with a session key management protocol, security associations for use by said provided Internet Protocol Security services;
**characterized in that** the security association management application means comprises at least one management client (MNG_CL_1) arranged in the application device (APP_DEV_1) and a management server (MNG_SRV) arranged in the service device (SRV_DEV), the at least one management client (MNG_CL_1) configured to issue security association creation and management requests, and the management server (MNG_SRV) configured to receive the issued security association creation and management requests and to respond to them in connection with said Internet Protocol Security service means (IPSEC).

2. The system according to claim 1, **characterized in that** said application device (APP_DEV_1) further comprises an interface means (IF) for providing an interface for communicating between said at least one management client (MNG_CL_1) associated with said application device (APP_DEV_1) and said management server (MNG_SRV).

3. The system according to claim 1, **characterized in that** said security association management requests include at least one of adding requests for adding security associations, deleting requests for deleting security associations, and querying requests for querying about security associations.

4. The system according to claim 2, **characterized in that** said interface means (IF) are arranged to use sockets for communication with said management server (MNG_SRV).

5. The system according to claim 2, **characterized in that** said interface means (IF) includes data structures used in communication between said management client (MNG_CL_1) and said management server (MNG_SRV).

6. The system according to claim 2, **characterized in that** said interface means (IF) are implemented as a software library linked dynamically or statistically into a corresponding management client (MNG_CL_1).

7. The system according to claim 1, **characterized in that** said Internet Protocol Security service means (IPSEC) and said management server (MNG_SRV) are arranged to use a local communication channel for communications between said Internet Protocol Security service means (IPSEC) and said management server (MNG_SRV).

8. The system according to claim 1, **characterized in that** at least one application device (APP_DEV_2) comprises two or more management clients (MNG_CL_2, MNG_CL_3), at least two of said management clients (MNG_CL_2, MNG_CL_3) are adapted to use different session key management protocols.

9. The system according to claim 1, **characterized in that** said communication network (CN) comprises a Local Area Network.

10. A method for remotely and transparently managing security associations of Internet Protocol Security, the method comprising the step of:
providing one or more Internet Protocol Security services in a service device, the provided services including at least one of authentication and encryption services (20);
**characterized in that** the method further comprises the steps of:
issuing, with a session key management protocol, security association creation and management requests from an application device, said security associations to be created and managed for use by said provided Internet Protocol Security services, and said application device being connected to said service device by a communication network (21);
receiving in said service device said security association creation and management requests issued from said application device (22); and
responding, in connection with an Internet Protocol Security service, to said security association creation and management requests received in said service device (23).

11. The method according to claim 10, **characterized in that** at least one of said security association creation and management requests issued from an application device and corresponding responses are communicated via an interface associated with said application device.

12. The method according to claim 10, **characterized in that** said security association management requests include at least one of adding requests for adding security associations, deleting requests for deleting security associations, and querying requests for querying about security associations.

## Patentansprüche

1. System zum entfernten und transparenten Verwalten von Sicherheitszuordnungen für Internet-Protokoll-Sicherheit, wobei das System umfasst:
eine Anwendungsvorrichtung (APP_DEV_1);
eine Dienstevorrichtung (SRV_DEV) mit einer Diensteeinrichtung für Internet-Protokoll-Sicherheit (IPSEC) zum Bereitstellen von einem oder mehreren Internet-Protokoll-Sicherheits-Diensten, wobei die Internet-Protokoll-Sicherheits-Dienste wenigstens einen eines Authentifizierungs- und Verschlüsselungsdienstes aufweisen;
ein Kommunikationsnetzwerk (CN) zum Verbinden der Anwendungsvorrichtung (APP_DEV_1) mit der Dienstevorrichtung (SRV_DEV); und
einer Sicherheitszuordnungsverwaltungsanwendungseinrichtung, die konfiguriert ist, Sicherheitszuordnungen zur Verwendung von den bereitgestellten Internet-Protokoll-Sicherheits-Diensten zu erzeugen und mit einem Sitzungsschlüsselsverwaltungsprotokoll zu verwalten;
**dadurch gekennzeichnet, dass** die Sicherheitszuordnungsverwaltungsanwendungseinrichtung wenigstens einen Verwaltungs-Client (MNG CL 1), der in der Anwendungsvorrichtung (APP_DEV_1) angeordnet ist, und einen Verwaltungs-Server (MNG_SRV) umfasst, der in der Dienstevorrichtung (SRV_DEV) angeordnet ist, wobei der wenigstens ein Verwaltungs-Client (MNG_CL_1) konfiguriert ist, Sicherheitszuordnungserzeugungs- und -verwaltungsanfragen auszugeben und der Verwaltungs-Server (MNG_SRV) konfiguriert ist, die ausgegebenen Sicherheitszuordnungserzeugungs- und -verwaltungsanfragen zu empfangen und auf diese in Verbindung mit der Diensteeinrichtung für Internet-Protokoll-Sicherheit (IPSEC) zu antworten.

2. System nach Anspruch 1, **dadurch gekennzeichnet, dass** die Anwendungsvorrichtung (APP_DEV_1) ferner eine Schnittstelleneinrichtung (IF) umfasst, um für eine Schnittstelle zur Kommunikation zwischen dem wenigstens einen Verwaltungs-Client (MNG_CL_1), der der Anwendungsvorrichtung (APP_DEV_1) zugeordnet ist, und dem Verwaltungs-Server (MNG_SRV) bereitzustellen.

3. System nach Anspruch 1, **dadurch gekennzeichnet, dass** die Sicherheitszuordnungsverwaltungsanfragen wenigstens eine von Ergänzungsanfragen zum Ergänzen von Sicherheitszuordnungen, Löschanfragen zum Löschen von Sicherheitszuordnungen und Abfrageanfragen für Abfragen über Sicherheitszuordnungen aufweisen.

4. System nach Anspruch 2, **dadurch gekennzeichnet, dass** die Schnittstelleneinrichtung (IF) ausgelegt ist, Sockets zur Kommunikation mit dem Verwaltungs-Server (MNG_SRV) zu verwenden.

5. System nach Anspruch 2, **dadurch gekennzeichnet, dass** die Schnittstelleneinrichtung (IF) Datenstrukturen aufweist, die bei Kommunikation zwischen dem Verwaltungs-Client (MNG_CL_1) und dem Verwaltungs-Server (MNG_SRV) verwendet werden.

6. System nach Anspruch 2, **dadurch gekennzeichnet, dass** die Schnittstelleneinrichtung (IF) als Software-Bibliothek implementiert ist, die dynamisch oder statisch mit einem entsprechenden Verwaltungs-Client (MNG_CL_1) verknüpft ist.

7. System nach Anspruch 1, **dadurch gekennzeichnet, dass** die Diensteeinrichtung für Internet-Protokoll-Sicherheit (IFSEC) und der Verwaltungs-Server (MNG_SRV) ausgelegt sind, einen lokalen Kommunikationskanal zur Kommunikation zwischen der Diensteeinrichtung für Internet-Protokoll-Sicherheit (IPSEC) und dem Verwaltungs-Server (MNG_SRV) zu verwenden.

8. System nach Anspruch 1, **dadurch gekennzeichnet, dass** wenigstens eine Anwendungsvorrichtung (APP_DEV_2) zwei oder mehr Verwaltungs-Clients (MNG_CL_2, MNG_CL_3) umfasst, wobei wenigstens zwei der Verwaltungs-Clients (MNG_CL_2, MNG_CL_3) ausgelegt sind, unterschiedliche Sitzungsschlüsselverwaltungsprotokolle zu verwenden.

9. System nach Anspruch 1, **dadurch gekennzeichnet, dass** das Kommunikationsnetzwerk (CN) ein lokales Netzwerk umfasst.

10. Verfahren zum entfernten und transparenten Verwalten von Sicherheitszuordnungen für Internet-Protokoll-Sicherheit, wobei das Verfahren den Schritt umfasst:
Bereitstellen von einem oder mehreren Internet-Protokoll-Sicherheits-Diensten in einer Dienstevorrichtung, wobei die bereitgestellten Dienste wenigstens einen eines Authentifizierungs- und Verschlüsselungsdienstes (20) aufweisen;
**dadurch gekennzeichnet, dass** das Verfahren ferner die Schritte umfasst:
Ausgeben von Sicherheitszuordnungserzeugungs- und -verwaltungsanfragen von einer Anwendungsvorrichtung mit einem Sitzungsschlüsselverwaltungsprotokoll, wobei die zu erzeugenden und zu verwaltenden Sicherheitszuordnungen zur Verwendung von den bereitgestellten Internet-Protokoll-Sicherheits-Diensten dienen, und die Anwendungsvorrichtung mittels eines Kommunikationsnetzwerks (21) mit der Dienstevorrichtung verbunden ist;
Empfangen der von der Anwendungsvorrichtung (22) ausgegebenen Sicherheitszuordnungserzeugungs- und -verwaltungsanfragen in der Dienstevorrichtung;
Antworten auf die in der Dienstevorrichtung (23) empfangenen Sicherheitszuordnungserzeugungs- und -verwaltungsanfragen in Verbindung mit einem Internet-Protokoll-Sicherheits-Dienst.

11. Verfahren nach Anspruch 10, **dadurch gekennzeichnet, dass** wenigstens eine der von einer Anwendungsvorrichtung ausgegebenen Sicherheitszuordnungserzeugungs- und -verwaltungsanfragen und entsprechende Antworten über eine der Anwendungsvorrichtung zugeordneten Schnittstelle kommuniziert werden.

12. Verfahren nach Anspruch 10, **dadurch gekennzeichnet, dass** die Sicherheitszuordnungsverwaltungsanfragen wenigstens eine von Ergänzungsanfragen zum Ergänzen von Sicherheitszuordnungen, Löschanfragen zum Löschen von Sicherheitszuordnungen und Abfrageanfragen für Abfragen über Sicherheitszuordnungen aufweisen.

## Revendications

1. Système destiné à la gestion, à distance et de manière transparente, d'associations de sécurité d'une sécurité de protocole Internet, le système comportant :
un dispositif d'application (APP_DEV_1) ;
un dispositif de service (SRV_DEV) comportant un moyen de service de sécurité de protocole Internet (IPSEC) en vue de fournir un ou plusieurs services de sécurité de protocole Internet, lesdits services de sécurité de protocole Internet comportant au moins l'un parmi des services d'authentification et de chiffrement ;
un réseau de communication (CN) en vue de connecter ledit dispositif d'application (APP_DEV_1) audit dispositif de service (SRV_DEV) ; et
un moyen d'application de gestion d'association de sécurité configuré en vue de créer et de gérer, avec un protocole de gestion de clés de session, des associations de sécurité devant être utilisées par lesdits services de sécurité de protocole Internet ;
**caractérisé en ce que** le moyen d'application de gestion d'association de sécurité comprend au moins un client de gestion (MNG_CL_1) agencé dans le dispositif d'application (APP_DEV_1) et un serveur de gestion (MNG_SRV) agencé dans le dispositif de service (SRV_DEV), ledit au moins un client de gestion (MNG_CL_1) étant configuré en vue d'émettre des demandes de gestion et de création d'associations de sécurité, et le serveur de gestion (MNG_SRV) étant configuré en vue de recevoir ces demandes de gestion et de création d'associations de sécurité et à y répondre conjointement avec ledit moyen de service de sécurité de protocole Internet (IPSEC).

2. Système selon la revendication 1, **caractérisé en ce que** ledit dispositif d'application (APP_DEV_1) comporte en outre un moyen d'interface (IF) pour fournir une interface en vue d'une communication entre ledit au moins un client de gestion (MNG_CL_1) associé audit dispositif d'application (APP_DEV_1) et ledit serveur de gestion (MNG_SRV).

3. Système selon la revendication 1, **caractérisé en ce que** lesdites demandes de gestion d'associations de sécurité comportent au moins l'une parmi des demandes d'ajout en vue d'ajouter des associations de sécurité, des demandes de suppression en vue de supprimer des associations de sécurité, et des demandes d'interrogation en vue d'exécuter des interrogations relatives aux associations de sécurité.

4. Système selon la revendication 2, **caractérisé en ce que** ledit moyen d'interface (IF) est agencé en vue d'utiliser des interfaces de connexion pour la communication avec ledit serveur de gestion (MNG_SRV).

5. Système selon la revendication 2, **caractérisé en ce que** ledit moyen d'interface (IF) comprend des structures de données utilisées dans la communication entre ledit client de gestion (MNG_CL_1) et ledit serveur de gestion (MNG_SRV).

6. Système selon la revendication 2, **caractérisé en ce que** ledit moyen d'interface (IF) est mis en oeuvre en tant qu'une bibliothèque de logiciels en liaison dynamique ou statistique dans un client de gestion correspondant (MNG_CL_1).

7. Système selon la revendication 1, **caractérisé en ce que** ledit moyen de service de sécurité de protocole Internet (IPSEC) et ledit serveur de gestion (MNG_SRV) sont agencés en vue d'utiliser un canal de communication local pour des communications entre un moyen de service de sécurité de protocole Internet (IPSEC) et ledit serveur de gestion (MNG_SRV).

8. Système selon la revendication 1, **caractérisé en ce qu'**au moins un dispositif d'application (APP_DEV_2) comporte deux ou plusieurs clients de gestion (MNG_CL_2, MNG_CL_3), au moins deux desdits clients de gestion (MNG_CL_2, MNG_CL_3) sont adaptés en vue d'utiliser différents protocoles de gestion de clés de session.

9. Système selon la revendication 1, **caractérisé en ce que** ledit réseau de communication (CN) comporte un réseau local.

10. Procédé destiné à la gestion à distance et de manière transparente d'associations de sécurité d'une sécurité de protocole Internet, le procédé comportant les étapes consistant à :
fournir un ou plusieurs services de sécurité de protocole Internet dans un dispositif de service, les services fournis comportant au moins l'un parmi des services d'authentification et de chiffrement (20),
**caractérisé en ce que** le procédé comporte en outre les étapes consistant à:
émettre, avec un protocole de gestion de clés de session, des demandes de gestion et de création d'association de sécurité à partir d'un dispositif d'application, lesdites associations de sécurité devant être créées et gérées en vue d'être utilisées par lesdits services de sécurité de protocole Internet, et ledit dispositif d'application étant connecté audit dispositif de service par un réseau de communication (21) ;
recevoir, dans ledit dispositif de service, lesdites demandes de gestion et de création d'association de sécurité émises à partir dudit dispositif d'application (22) ; et
répondre, conjointement avec un service de sécurité de protocole Internet, auxdites demandes de gestion et de création d'association de sécurité reçues dans ledit dispositif de service (23).

11. Procédé selon la revendication 10, **caractérisé en ce que** au moins l'une desdites demandes de gestion et de création d'association de sécurité d'un dispositif d'application et des réponses correspondantes sont communiquées via une interface associée audit dispositif d'application.

12. Procédé selon la revendication 10, **caractérisé en ce que** lesdites demandes de gestion et de création d'association de sécurité incluent au moins l'une parmi des demandes d'ajout en vue d'ajouter des associations de sécurité, des demandes de suppression en vue de supprimer des associations de sécurité, et des demandes d'interrogation en vue d'exécuter des interrogations relatives aux associations de sécurité.
